(19) Europäisches Patentamt

European Patent Office

Office européen des brevets

(11) **EP 0 899 966 A2**

## (12) EUROPÄISCHE PATENTANMELDUNG

(43) Veröffentlichungstag:
**03.03.1999 Patentblatt 1999/09**

(51) Int. Cl.$^6$: **H04N 9/31**

(21) Anmeldenummer: 98113604.7

(22) Anmeldetag: 21.07.1998

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **29.08.1997 DE 19737861**

(71) Anmelder:
**LTD Gmbh & Co. Laser-Display-Technologie KG
07552 Gera (DE)**

(72) Erfinder:
• **Hiller, Klaus
  07551 Gera (DE)**
• **Göpfert, Frank
  07774 Jena (DE)**

(74) Vertreter:
**Geyer, Werner, Dr.-Ing. et al
Patentanwälte
Geyer, Fehners & Partner
Perhamerstrasse 31
80687 München (DE)**

### (54) Rückprojektor

(57) Bei einem Rückprojektor mit einem Gehäuse, an dessen Vorderseite ein Schirm (2) zur Darstellung eines Videobildes angeordnet ist, mit einer helligkeits- und farbmodulierten R-G-B-Lichtquelle (5) zur Emission eines Lichtbündels, mit einer Ablenkeinrichtung (6) zum Rastern dieses Lichtbündels, mittels der das Lichtbündel bezüglich der bildmäßigen Rasterung über einen Gesamtwinkel $\alpha$ abgelenkt wird, und mit einem im Gehäuse befindlichen, unter einem Winkel $\delta$ angeordneten Umlenkspiegel (3), mit dem das aus einem reellen oder virtuellen Scheitelpunkt des Gesamtablenkwinkels $\alpha$ austretende Lichtbündel auf den Schirm (2) umgelenkt wird, ist vorgesehen, daß der vor dem Umlenkspiegel (3) liegende virtuelle oder reelle Scheitelpunkt an einem Ort liegt, bei dem der bei der Ablenkung kleinste Winkel $\beta$ des Lichtbündels zur Oberfläche des Schirms kleiner als 20° und der Winkel

$$\delta \leq 45° - \frac{\alpha}{4} + \beta$$

ist.

Fig. 3

EP 0 899 966 A2

**Beschreibung**

Die Erfindung bezieht sich auf einen Rückprojektor mit einem Gehäuse, an dessen Vorderseite ein Schirm zur Darstellung eines Videobildes angeordnet ist, mit einer helligkeits- und farbmodulierten R-G-B-Lichtquelle zur Emission eines Lichtbündels, mit einer Ablenkeinrichtung zum Rastern dieses Lichtbündels, mittels der das Lichtbündel bezüglich der bildmäßigen Rastetung über einen Gesamtwinkel $\alpha$ abgelenkt wird, und mit einem im Gehäuse befindlichen, unter einem Winkel $\delta$ angeordneten Umlenkspiegel, mit dem das aus einem virtuellen Scheitelpunkt des Gesamtablenkwinkels $\alpha$ austretende Lichtbündel auf den Schirm umgelenkt wird.

Derartige Rückprojektoren sind aus der DE 43 24 849 C2 bekannt. Der aus dieser Druckschrift bekannte Umlenkspiegel soll die Bautiefe verringern. Dies ist im folgenden begründet. Aufgrund der Gesetzmäßigkeiten der geometrischen Optik ist mit der Bildgröße ein bestimmter optischer Weg vorgegeben. Insbesondere bei einem Ruckprojektor gemäß DE 43 29 849 C2 beruht die Bilderzeugung auf Winkelablenkungen von Lichtbündeln. Daher ist eine Vergrößerung des Bildes immer mit einer Vergrößerung der Geräteabmessungen verbunden. Das heißt, für eine gegebene Bildgröße ist die erreichbare Bautiefe immer begrenzt.

Um trotzdem geringe Gehäusetiefen, also möglichst flache Rückprojektoren, zu schaffen, wird der optische Strahlengang über den Umlenkspiegel gefaltet. Während dazu gemäß der vorhergehend genannten Druckschrift nur ein einziger Umlenkspiegel verwendet wird, sind dagegen aus der DE 31 52 020 A1 und der US 4,00,080 auch Vorrichtungen bekannt, bei denen drei Umlenkspiegel eingesetzt werden.

Aufgabe der Erfindung ist es, bekannte Rückprojektoren bezüglich der Bautiefe zu optimieren.

Die Aufgabe wird dadurch gelöst, daß der vor dem Umlenkspigel liegende virtuelle oder reelle Scheitelpunkt an einem Ort liegt, bei dem der bei der Ablenkung kleinste Winkel $\beta$ des Lichtbündels zur Oberfläche des Schirms kleiner als 20° und der Winkel

$$\delta \le 45° - \frac{\alpha}{4} + \beta$$

ist, wobei der Winkel $\delta$ für gekrümmte Spiegelflächen zwischen der Projektionsfläche und der Sehne zwischen den extremen Auftreffpunkten des Lichtbündels auf dem Umlenkspiegel bei der bildmäßigen Rastetung über den Winkel $\alpha$ bestimmt ist.

Aufgrund dieser Lehre läßt sich ein Rückprojektor bei beliebigen einrichtungsbedingten Ablenkwinkeln $\alpha$ bezüglich der Bautiefe optimieren. Insbesondere hat sich herausgestellt, daß derjenige Umlenkspiegel, der bezüglich der Lichtausbreitung am nähesten am Schirm liegt, den größten Beitrag für derartige Optimierungen erbringt. Wird nur ein einziger Umlenkspiegel eingesetzt, gelangt das Lichtbündel direkt, nachdem es von der Ablenkeinrichtung ausgetreten ist, auf diesen. Der genannte Scheitelpunkt ist dann ein reeller Punkt und befindet sich am Ort der Ablenkung in der Ablenkeinrichtung oder der Austrittspupille einer nachfolgenden Optik.

Verwendet man mehrere Umlenkspiegel, dann ist der hier zu betrachtende Scheitelpunkt vor dem im Lichtweg letzten Umlenkspiegel ein Spiegelbild und daher virtuell. Unabhängig davon, ob der Scheitelpunkt virtuell oder reell ist, ist jedoch das gleiche Prinzip anwendbar.

Um eine kompakte Bauform zu schaffen, sollte der Umlenkspiegel möglichst nahe am Projektionsschirm liegen. Die für die Optimierung einzuhaltenden Grenzen sind dabei im wesentlichen von der Größe des Schirms sowie den Abmessungen des übrigen Gehäuses abhängig. Unerwarteterweise hat sich aber herausgestellt, daß man das gewünschte Verhalten unabhängig von der sonstigen Bauform durch den kleinstmöglichen Winkel $\beta$ des Lichtbündels zur Vertikalen beschreiben kann. Demgemäß wird festgelegt, daß dieser Winkel kleiner als 20° sein soll. Man hätte annehmen können, daß der Winkel möglichst klein sein, also nahezu bei 0° liegen sollte. Jedoch läßt ein Winkel verschieden von 0°, aber insbesondere unterhalb von 5°, 10° oder 20° bei einem besonders kompakten Rückprojektor auch zu, daß genügend Raum für Bedienelemente und Lautsprecher an der Vorderseite zur Verfügung steht. Eine Vergrößerung des Winkels $\beta$ führt bei Wahl geeigneter Bedingungen bei ansonsten ähnlichen Projektionsbedingungen zu kleineren Winkeln $\delta$ des Umlenkspiegels zum Schirm, der die erreichbare verringerte Gehäusetiefe wesentlich mitbestimmt. Bezüglich $\delta$ hat sich als besonders günstig herausgestellt, wenn dieser Winkel gemäß der oben angegebenen Ungleichung gewählt wird.

Die Lehre ist sowohl für plane Spiegel als auch für gekrümmte Spiegelflächen anwendbar. Während allerdings die Bedeutung des Winkels $\delta$ für plane Spiegel eindeutig definiert ist, muß für gekrümmte Spiegelflächen eine entsprechende Bedingung gefunden werden.

Wenn man sich vor Augen hält, daß der Winkel $\delta$ im wesentlichen die Tiefe für das Gehäuse des Rückprojektors aufgrund der Lage der Kanten des Umlenkspiegels begrenzt, erkennt man, daß der Winkel $\delta$ bei gekrümmten Spiegelflächen dann eine für plane Spiegel ähnliche Bedeutung hat, wenn er als Winkel zwischen der Projektionsfläche und der Sehne zwischen der Projektionsfläche und den extremen Auftreffpunkten des Lichtbündels bei der bildmäßigen Rasterung über den Winkel $\alpha$ bestimmt ist. Dabei ist der eine der extremen Auftreffpunkte beim Ablenkwinkel 0° und der andere bei dem Gesamtablenkwinkel $\alpha$ gegeben.

Ein noch kompakteres Videogerät läßt sich schaffen, wenn gemäß einer vorteilhaften Weiterbildung der Erfindung der Scheitelpunkt virtuell und durch weitere Umlenkspiegel im Rückprojektor erzeugt ist, also der optische Weg noch durch weitere Spiegel gefaltet wird.

Aus der oben angegebenen Ungleichung für den Winkel δ ist erkennbar, daß dieser Winkel relativ frei wählbar ist. Weiter können beliebig gekrümmte Spiegelflächen für Umlenkspiegel verwendet werden. Bei sehr kleinen Winkeln δ oder großen Krümmungen sind jedoch dadurch Nachteile für die Videoprojektion zu erwarten, daß geometrische Abbildungsfehler auftreten, wie sie jedem beispielsweise von der Schrägprojektion von Das bekannt sind. Dabei werden insbesondere trapezförmige Bilder erzeugt.

Diese Geometriefehler sollen möglichst vermieden werden. Aufgrund dieser Forderung wäre die Wahl des Winkel δ dann letztendlich weiter eingeschränkt. Andererseits möchte man den Winkel δ aber auch im Interesse einer möglichst geringen Bautiefe sehr klein halten, ohne eine irgendwie geartete Beschränkung für δ beachten zu müssen.

Um die Bautiefe so gering wie möglich halten zu können, sind deshalb gemäß einer vorteilhaften Weiterbildung der Erfindung eine Recheneinrichtung, mit der das Videobild vor Projektion bezüglich Verzerrung aufgrund Schrägprojektion oder Krümmung des Umlenkspiegels neu berechnet wird, sowie eine Steuereinrichtung vorgesehen, welche die Ablenkung und/oder Intensitätsmodulation des Lichtbündels steuert, so daß auf dem Schirm in Bildrichtung ein nahezu unverzerrtes Videobild erscheint, das bezüglich der Zeilenabstände weniger als 30% und insbesondere weniger als 10% von einer Gleichverteilung der Zeilen abweicht.

Dementsprechend können beliebige Spiegelformen und sehr kleine Winkel δ eingesetzt werden, indem das Bild für die Bilderzeugung entgegengesetzt zu den aus dem Aufbau resultierenden geometrischen Fehlern verzerrt wird, so daß dann nach der geometrisch verzerrenden Umlenkung auf den Projektionsschirm wieder ein nahezu unverzerrtes Bild abgebildet wird. Die Grenze für tolerierbare Bildfehler ist im wesentlichen subjektiv. Diesbezügliche Versuche haben gezeigt, daß Videobilder von Beobachtern noch als akzeptabel empfunden werden, wenn Zeilenabstände von einer Gleichverteilung im Bereich von 30% und insbesondere weniger als 10% voneinander abweichen.

Derartige Bildverzerrungen zur Kompensation von Bildfehlem sind bekannt. Im allgemeinen läßt sich diese Kompensation durch Berechnung des durch die Ablenkung verzerrt dargestellten Bildes aus dem unverzerrt darzustellenden Bild erzielen. Eine andere Möglichkeit besteht in einer von gleichmäßiger, zeitlich konstanter Winkelablenkung abweichenden Ansteuerung der Ablenkeinrichtung, wozu geeignete Steuerschaltungen vorgesehen werden können. Je nach Art der Geometriekorrektur kann es dann auch erforderlich sein, die Intensität unterschiedlich zum unverzerrten Bild anzusteuern.

Geringere Bildgrößen ergeben sich dann, wenn der Schirm in einem verringerten Abstand vom Umlenkspiegel angeordnet ist. Mit großen Abständen wächst allerdings die Bautiefe. Als optimal hat es sich gemäß einer Weiterbildung der Erfindung gezeigt, wenn der Abstand des Schirms zu dem Punkt des Umlenkspiegels, auf den das Lichtbündel beim Winkel β auftritt, kleiner als 10 cm und insbesondere kleiner als 3 cm ist.

Bei einem Abstand in diesem Bereich lassen sich die Lichtwege auch durch weitere Umlenkspiegel verkürzen, wenn die Ablenkeinrichtung innerhalb dieses Abstandes angeordnet ist, die dann durch die weiteren Umlenkspiegel in den gemäß Lichtfortpflanzung letzten Umlenkspiegel abgebildet wird. Dieser Vorteil wird nachfolgend noch anhand von einem Ausführungsbeispiel näher verdeutlicht.

Die vorhergehend genannte Verzerrung mit dem zusätzlichen Rechenaufwand läßt sich verringern, wenn der Umlenkspiegel gemäß einer bevorzugten Weiterbildung der Erfindung ein planer Spiegel ist und ein beim Ablenkwinkel α/2 in Richtung des Umlenkspiegels reflektiertes Lichtbündel senkrecht auf den Schirm auftritt. Dann verschwinden nämlich die Trapezverzerrungen. Verzerrungen, wie sie beispielsweise als Kissenverzeichnungen durch die Ablenkeinrichtung erzeugt werden, bleiben jedoch bestehen und liegen entweder im tolerierbaren Bereich oder können ebenfalls mit einer Recheneinrichtung oder einer speziellen Steuerung der Ablenkung, wie vorhergehend beschrieben, korrigiert werden.

Im Prinzip kann man die R-G-B-Lichtquelle an verschiedenen Orten im Gehäuse anordnen. Eine Rückprojektion von der Oberseite des Gehäuses aus, insbesondere unter Verwendung von zwei Umlenkspiegeln, ist durchaus möglich. Es können sich jedoch Stabilitätsprobleme ergeben, wenn die R-G-B-Lichtquelle beispielsweise Festkörperlaser aufweist, da sich der Schwerpunkt dann wegen des Gewichtes dieser Laser sehr weit nach oben verschiebt.

Für derartige beispielhaft genannte Lichtquellen ist gemäß einer vorteilhaften Weiterbildung vorgesehen, daß die R-G-B-Lichtquelle auf dem Boden des Gehäuses angeordnet ist. Dann befindet sich ein Großteil des Gewichtes in Bodennähe, und der Schwerpunkt des Rückprojektors liegt entsprechend niedrig, wodurch dessen Stabilität erhöht ist. Dies löst ebenfalls das Problem der Bautiefenoptimierung, denn bei sehr flachen Anordnungen geringerer Bautiefe würde die Gefahr des Umfallens bestehen, die entweder nur durch eine größere Bautiefe des Gehäuses oder aber durch eine Schwerpunktverlagerung, wie bei dieser Weiterbildung der Erfindung, aufgefangen werden kann.

Das bedeutet nun aber nicht, daß auch die Ablenkeinrichtung unbedingt bodenseitig angeordnet werden muß, da die Ablenkeinrichtung von der R-G-B-Lichtquelle mittels einer Lichtleitfaser getrennt werden kann. Doch hat es sich insbesondere auch für die Optimierung der Vorrichtung als besonders vorteilhaft herausgestellt, wenn die Ablenkeinrichtung ebenfalls weit unten im Rückprojektor angeordnet ist, weil sich dadurch besonders günstige Projektionsgeometrien ergeben. Dies wird anhand später beschriebener Ausführungsbeispiele noch deutlicher.

Prinzipiell kann ein beliebiger Aufbau skaliert werden, da der Abstand der Ablenkeinrichtung von der Projektionsfläche im wesentlichen durch den Ablenkwinkel, der prinzipiell eine dimensionslose Größe ist, bestimmt ist. Bei festgelegter gewünschter Bildgröße kann man die Bautiefe deshalb nach deren Optimierung nur dann weiter verringern, wenn der Ablenkwinkel $\alpha$ vergrößert wird. Dazu ist gemäß einer vorteilhaften Weiterbildung vorgesehen, daß die Ablenkeinrichtung eine bezüglich der Tangensbedingung korrigierte Vergrößerungsoptik zur proportionalen Vergrößerung des Tangens des Ablenkwinkels enthält.

Allgemein würde man annehmen, daß jede beliebige Aufweitungsoptik die Aufgabe erfüllt. Es hat sich jedoch gezeigt, daß insbesondere die genannte Vergrößerungsoptik, die bezüglich der Tangensbedingung korrigiert ist und eine proportionale Vergrößerung des Tangens des Ablenkwinkels liefert, besonders geeignet ist, denn sie läßt sich bezüglich optischer Fehler geeignet korrigieren. Weitere Korrekturmöglichkeiten, insbesondere zum Ausgleich der ungleichmäßigen Zeilendichte aufgrund der Tangensabhängigkeit der Ablenkeinrichtung, können dann auch mittels der genannten Entzerrung für geometrische Bildfehler kompensiert werden.

Die Erfindung ermöglicht eine drastische Reduzierung der Geräteabmessungen. Die Gerätehöhe liegt dabei in der Größenordnung der Bildhöhe, insbesondere für Projektionen mit geometrischen Bildfehlern, für die eine zusätzlichen Neuberechnung eines Bildes zur Entzerrung durchgeführt wird.

Es hat sich herausgestellt, daß die Gerätetiefe bei derartigen Geräten mit Schirmdiagonalen von mehr als zwei Metern wesentlich kleiner als 50 cm sein kann. Bei vergleichsweise großen Schirmabmessungen wird ein Verhältnis von Schirmdiagonale zu Tiefe zwischen 6:1 und 10:1 erreicht. Dabei sind die Abbildungsfehler minimal und bei einem herkömmlichen Videobild nicht mit dem Auge erkennbar.

Insbesondere ergeben sich bei einem Rückprojektor Vorteile bezüglich der Bautiefe, mit dem Farbbilder mit einem intensitäts- und farbmodulierten R-G-B-Lichtbündel auf einen Schirm ausgeleuchtet werden und der folgende Merkmale aufweist:

- eine elektronische Steuereinrichtung,

- eine helligkeits- und farbmodulierbare kollineare Lichtquelle, die Licht in einer Ablenkeinrichtung koppelt, welche aus einem Zeilenspiegel, einem Bildspiegel und einer nachfolgenden Vergrößerungsoptik besteht,

- mindestens einen Umlenkspiegel in Lichtrichtung und nachfolgend

- einen Schirm, der aus mehreren optisch wirksamen, schichtweise hintereinander angeordneten Strukturen besteht, insbesondere einer Fresnellinse, deren objektseitiger Brennpunkt in die Austrittspupille der Vergrößerungsoptik oder der Ablenkeinrichtung abgebildet ist und deren Fresnel-Struktur in Lichtrichtung gesehen an der Lichteintrittsseite liegt, gefolgt von einer Scheibe mit definiert vorgegebener vertikaler und horizontaler Streuung.

Bei dieser Vorrichtung ist ferner vorgesehen, daß der Lichtweg der ersten oder letzten Zeile nahezu parallel zur Schirmoberfläche verläuft und der Winkel $\beta$ zwischen dem Schirm und dem Lichtweg der ersten oder letzten Zeile größer oder gleich 0° und kleiner 20° ist sowie der Abstand zwischen Schirm und einer Spiegelkante größer als 0 mm und insbesondere 1 bis 30 mm beträgt. Ferner ist, wenn die optische Achse des Ablenkeinrichtung mit $\alpha/2$ von der Projektion der ersten Zeile aus festgelegt ist und $\alpha$ der maximale Gesamtablenkwinkel der Ablenkeinrichtung in Bildrichtung ist, der Winkel $\delta$ zwischen dem Schirm und dem Umlenkwinkel so bestimmt, daß dieser kleiner oder gleich 45° minus dem Viertel des optischen wirksamen Gesamtablenkwinkels $\alpha$ des Bildspiegels plus dem Winkel $\beta$ der Projektion der ersten Zeile zum Schirm ist, an dem die erste Zeile auf den Umlenkspiegel trifft.

Aufgrund des oben genannten Aufbaus des Schirms wird zusammen mit der Bilderzeugung mittels des schreibenden kollinearen R-G-B-Laserstrahls ein hoher Grad an Lichtabstrahlung erreicht. Durch die Auslegung der optischen Gesamteinrichtung, insbesondere der Schirmstruktur, erfolgt eine definierte Lichtabstrahlung in horizontaler und vertikaler Richtung in den Betrachtungsraum. Außerdem wird der vom Gehäuse eingeschlossene Raum optimal genutzt.

Diese Vorrichtung läßt sich auch auf folgende Arten vorteilhaft weiterbilden.

1. Die Ablenkeinrichtung befindet sich im bodenseitigen, schirmsertigen Gehäuseteil; die optische Achse der Ablenkeinrichtung liegt bei einem Winkel im Bereich zwischen dem halben Ablenkwinkel $\alpha$ der Ablenkeinrichtung des Rückprojektors zuzüglich des Winkels $\beta$ zum Schirm, wobei nachfolgend in Lichtrichtung gesehen ein Umlenkspiegel deckenseitig unter einem Winkel $\delta$ von kleiner/gleich 45°+$\beta$-$\alpha/2$ zum Schirm sowie mit seiner Oberkante an die Oberkante des Schirmes angrenzend angeordnet ist und der optische Aufbau bezüglich einer vertikalen Schirmachse symmetrisch ist.

2. Die Projektionsachse der Ablenkeinrichtung ist durch den oder die Umlenkspiegel so ausgerichtet, daß diese auf der Mitte des Schirmes im rechten Winkel steht.

3. Die Projektionsachse der Ablenkeinrichtung ist durch den Winkel δ des Umlenkspiegels so ausgerichtet, daß diese Achse gegenüber der Mitte der Zeilen zum Schirm unter einer Neigung χ liegt. Weiter ist eine elektronische Steuerung vorgesehen ist, die die Verzeichnung der Zeilenlänge, der Zeilenabstände, der Bildpunktabstände und/oder der Helligkeit und Farbe des jeweiligen Bildpunktes infolge der dadurch gegebenen Schrägprojektion unter dem Winkel χ beseitigt.

4. Im Strahlengang zwischen dem Umlenkspiegel und der Ablenkeinrichtung ist ein weiterer Umlenkspiegel angeordnet, der den Strahlengang entgegen der Lichtrichtung in Richtung des hinteren bodenseitigen Gehäuseteiles umlenkt, so daß die optische Achse der Ablenkeinrichtung im Bereich zwischen 70° und 120° zum Schirm steht, was eine Verringerung der Bauhöhe bedeutet.

5. Der Umlenkspiegel und der vorgenannte weitere Umlenkspiegel stehen parallel zueinander.

6. Der Umlenkspiegel hat Trapezform und ist mit der schmalen Breitseite bodenseitig angeordnet und weist vorn Schirm weg.

7. Ein weiterer Umlenkspiegel hat ebenfalls Trapezform und ist mit der schmalen Breitseite unterhalb des im Lichtweg letzten Umlenkspiegel angeordnet.

8. Der Diagonalwinkel der Projektion, gemessen von der Austrittspupille der Projektionsoptik, liegt im Bereich von 60° bis 110° und hat insbesondere einen Wert von 86°.

9. Für eine Darstellung des Bildformates 16:9 liegt der vertikale Ablenkwinkel zwischen 30° und 50° und beträgt insbesondere 44°, wobei der horizontale Ablenkwinkel zwischen 50° und 85° liegt und insbesondere 76° beträgt.

10. Für eine Darstellung des Bildformates 4:3 liegt der vertikale Ablenkwinkel zwischen 30° und 50° und insbesondere bei 44°, wobei der horizontale Ablenkwinkel zwischen 50° und 85° liegt und insbesondere 76° beträgt.

11. Der Raum unterhalb des Schirms bis zum Gehäuseboden im Bereich der Frontseiten ist als Einbauraum für Audiotechnik, Steuergeräte und Bedienelemente vorgesehen.

12. Die Lichtquelle ist eine R-G-B-Laseranordnung, die im bodenseitigen Teil des Gehäuses angeordnet ist, wobei auch die Steuerelektronik sowie das Video- und Audioteil im bodenseitigen Gehäuseteil angeordnet sind.

13. Die Lautsprecher des Audioteils sind im frontseitigen bodenseitigen Gehäuseteil angeordnet.

14. Die helligkeits- und farbmodulierbare Lichtquelle ist über eine Lichtleitfasersteckverbindung mit der Ablenkeinrichtung verbunden.

Die Anordnung der Einrichtung zur Bilderzeugung im fußbodenseitigen Gehäuseteil führt zu einer günstigen Schwerpunktlage des Gerätes. Infolge der Aufteilung im Gehäuse gemäß der Weiterbildung ist es ferner möglich, den optischen Kanal auf einfache Weise so abzudichten, daß kein Staub eindringen kann. Die Lage der elektronischen Baugruppen zur Bilderzeugung sowie der R-G-B- Lichtquelle ist völlig unabhängig vom optischen Kanal und für Wartungsarbeiten gut zugänglich.

Die Erfindung wird nachfolgend anhand von Ausführungsbeispielen in Verbindung mit der Zeichnung noch näher beschrieben. Es zeigen:

Fig. 1      eine Seitenansicht eines Rückprojektors mit Umlenkspiegel;

Fig. 2      eine Seitenansicht eines Rückprojektors mit Umlenkspiegel und Schrägprojektion unter einem Winkel χ von ungefähr 30°;

Fig. 3      einen Rückprojektor mit einem von Null verschiedenen Winkel β des Lichtbündels für die erste Zeile zum Schirm;

Fig. 4      einen Rückprojektor mit gewölbtem, fokussierendem Umlenkspiegel;

Fig. 5      eine Seitenansicht eines Rückprojektors mit einem vergrößernden, gekrümmten Umlenkspiegel;

Fig. 6      einen Rückprojektor mit zwei Umlenkspiegeln;

Fig. 7      einen Rückprojektor ähnlich wie in Fig. 6, jedoch zur Erläuterung der Auswirkung der Winkelstellungen einer Projektionsbaugruppe;

Fig. 8      einen Rückprojektor ähnlich wie in Fig. 2, jedoch mit zwei im Winkel zueinander angeordneten Umlenkspiegeln;

Fig. 9      ein anderes Ausführungsbeispiel eines Rückprojektors mit zwei Umlenkspiegeln.

In den folgenden Ausführungsbeispielen ist das Gehäuse in den darauf bezogenen Figuren jeweils weggelassen worden. Die minimalen Abmessungen des Gehäuses ergeben sich jedoch durch die Umrisse der Ausführungsbeispiele. Allgemein sind aber die wesentlichen minimalen Abmessungen für das Gehäuse angegeben, wobei die Bildbreite unabhängig von den nachfolgenden Betrachtungen ist und nur durch den Zeilenspiegel des Ablenksystems begrenzt ist. Sie läßt sich jedoch einstellen. Die Größe t bezeichnet die minimale Bautiefe, s die Gesamthöhe des Rückprojektors und h die Höhe des Schirms.

Alle diese Ausführungsbeispiele beruhen auf einer Projektionstechnik, bei der ein Videobild mit Hilfe von Lichtbündeln auf einen Schirm 2 geschrieben wird. Diese Technik ist beispielsweise aus der DE 43 24 849 C2 zu entnehmen, auf deren Inhalt diesbezüglich ausdrücklich hingewiesen wird.

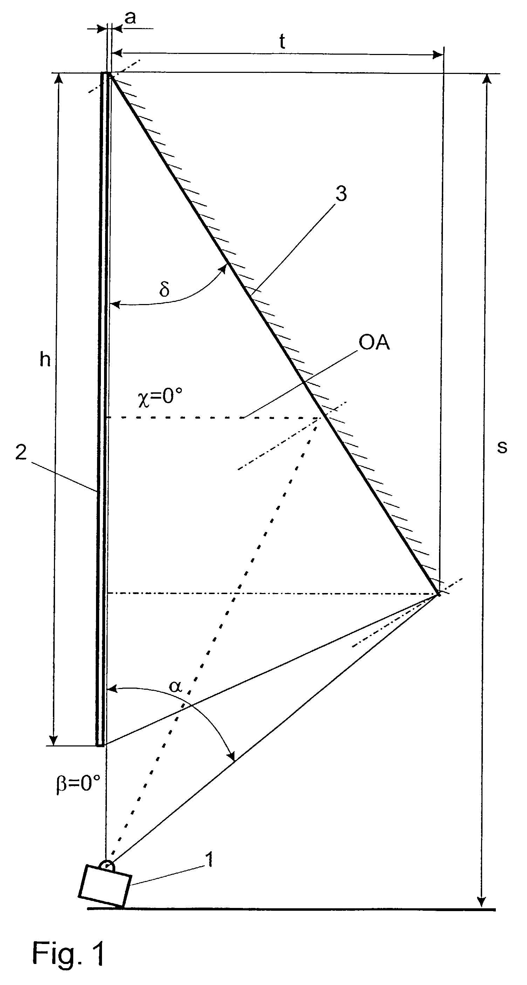

Fig. 1 zeigt die funktionsbestimmenden Baugruppen eines Rückprojektors. Eine in Fig. 1, unten, gezeigte Projektionsbaugruppe 1 enthält eine helligkeits- und farbmodulierte RGB-Lichtquelle sowie eine zweiachsige Ablenkeinrichtung für die Rasterung des Lichtbündels in Zeilen- und Bildrichtung.

Der hier interessierende Gesamtablenkwinkel für die Bildablenkung wird im folgenden immer mit „α" sowie die optische Achse mit „OA" bezeichnet.

In diesem Ausführungsbeispiel ist der Winkel für die erste Zeile, die am oberen Rand des Schirms 2 für das Videobild geschrieben wird, 0°. Dabei läuft das Lichtbündel parallel zur am Schirm 2 ausgebildeten Projektionsfläche. Bei diesem Winkel von 0°, der allgemein als Winkel β zwischen der Projektionsfläche und dem dem Schirm 2 nächsten Lichtbündel definiert ist, ergibt sich eine minimale Bautiefe für den Rückprojektor. Wie aus dem folgenden Ausführungsbeispiel noch erkennbar sein wird, lassen sich jedoch auch sehr geringe Bautiefen bei Winkeln β verschieden von 0° erreichen. Insbesondere hat sich herausgestellt, daß die hier vorgeschlagene Optimierung auch möglich ist, wenn man Winkel bis zu β=20° zuläßt.

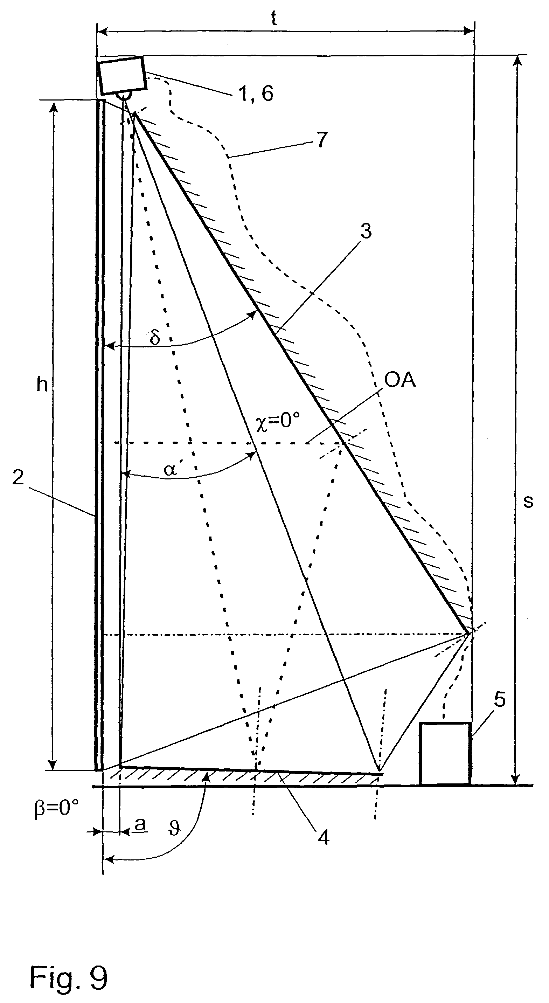

Der Abstand des Lichtbündels der ersten Zeile vom Schirm 2 ist mit der Größe a bezeichnet. Dieser Abstand a sollte für praktische Zwecke im Bereich von 0,5 cm bis 3 cm liegen und erlaubt die Verwendung geeigneter Halterungen der Einzelteile des Rückprojektors. Dabei wird berücksichtigt, daß beispielsweise der Umlenkspiegel 3 aufgrund der üblicherweise angestrebten Größe bei einem Rückprojektor sehr schwer sein kann und nach einer ausreichend guten Halterung verlangt, die entsprechenden Platz benötigt. Der Abstand a kann jedoch auch wesentlich, wie in einem Ausführungsbeispiel von Fig. 9 gezeigt ist, verschieden von 0 sein und sogar bis zu 10 cm betragen, um Platz für die in diesem Ausführungsbeispiel gezeigten unterschiedlichen Projektionsbedingungen zu schaffen, die später im einzelnen noch verdeutlicht werden.

Der Abstand a sollte für das Ausführungsbeispiel von Fig. 1 möglichst 0,5 cm sein, damit das Lichtbündel beim Schreiben der ersten Zeile vom Schirm 2 beabstandet ist und von diesem selbst, beispielsweise bei eventuellen akustischen Wellen im Schirm 2, die durch Umgebungsgeräusche verursacht werden können, nicht beeinflußt wird. Um den Einfluß derartiger Störungen zu vermeiden, ist zur Festlegung des Abstandes a insbesondere auch zu beachten, daß der Schirm 2 eine Fresnel-Struktur enthält, um die auf dem Schirm auftreffenden Lichtbündel in geeigneter Richtung zum Beobachter zu führen. Mit der Fresnel-Struktur wird erreicht, daß das Licht, das aufgrund der Wirkungsweise der Winkelablenkung auf den Schirm 2 auffällt, unabhängig vom Winkel immer in Richtung des vor dem Schirm 2 befindlichen Beobachters abgelenkt wird.

Der in diesem Ausführungsbeispiel genannte Umlenkspiegel 3 schließt mit der am Schirm 2 ausgebildeten Projektionsfläche den Winkel δ ein. Zur Minimierung der Bautiefe hat sich für diesen Winkel δ eine Obergrenze von 45°+β-α/4 als optimal herausgestellt. Dies gilt insbesondere für die Geradprojektion. Geradprojektion bedeutet, daß die optische Achse, die durch den Umlenkspiegel 3 in ihrer Richtung verändert auf die geometrische Mitte der Projektionswand weist, einen Winkel von χ=0° mit dem Schirm 2 einschließt.

Bei sehr kleinem Winkel δ vergrößert sich der Winkel χ der optischen Achse zum Schirm 2 und liegt außerhalb des Mittelpunkts des Schirms. Es erfolgt dann eine Schrägprojektion, bei der zu beachten ist, daß geometrische Bildfehler, wie die bekannten Trapezverzerrungen, auftreten, die bei der Darstellung des Bildes berücksichtigt werden können. Allerdings ist für kleine Winkel χ nicht unbedingt eine Korrektur erforderlich, da diese Verzerrungen bei im wesentlichen auf gleiche Länge korrigierten Zeilenlängen, wenn die Zeilenabstände von einer Gleichverteilung um weniger als 30% abweichen, üblicherweise nicht mehr wahrgenommen werden.

Die in Fig. 1 gezeigte Verringerung der Bautiefe ist außerordentlich vorteilhaft. Bei einem derartigen Geräteaufbau errechnet sich die Tiefe t diese Gerätes zu:

$$t = \frac{h}{\tan\left(45°+\frac{\alpha}{4}\right)+\tan\left(\frac{\alpha}{2}\right)}$$

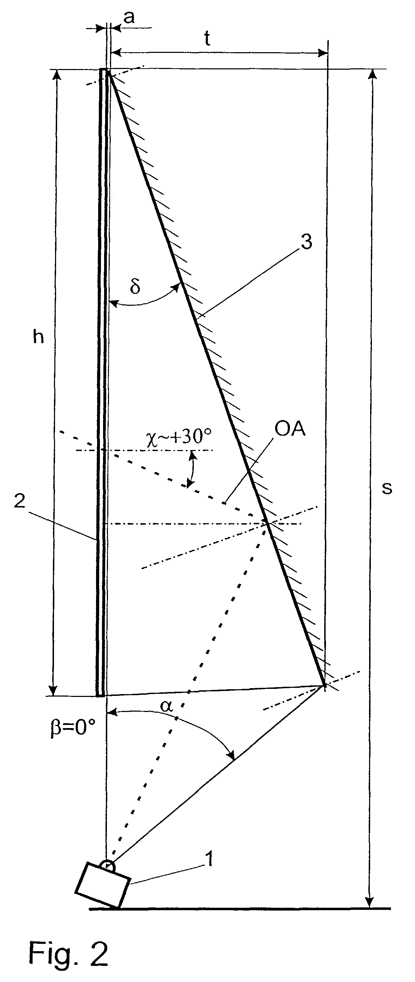

Auch die Bauhöhe s des Rückprojektionsgerätes wird wesentlich nur durch den Gesamtablenkwinkel α der Bildablenkung bestimmt. Die in Fig. 2 gezeigte weitere Verringerung der Bautiefe t durch Schrägprojektion und einen Winkel χ = 30° verringert dagegen die Bautiefe t und die Bauhöhe s bei gleichbleibender Bildgröße h um etwa ein weiteres Drittel, indem der Umlenkspiegel 3 unter einem kleineren Winkel δ als beim Beispiel von Fig. 1 zu der am Schirm 2 ausgebildeten Projektionsfläche angeordnet wird. Der Gesamtablenkwinkel des Bildspiegels in der Projektionsbaugruppe 1 bleibt dabei unverändert.

Wie vorstehend erläutert wurde, kann die geometrische Verzerrung aufgrund einer Schrägprojektion mit einem von Null verschiedenen Winkel $\chi$ durch eine Entzerrung des Bildes ausgeglichen werden. Dabei können gleichzeitig auch andere Korrekturen, wie beispielsweise Kissenverzeichnungen, durch die Ablenkeinrichtung und die Ungleichmäßigkeit der Zeilen aufgrund der Tangensabhängigkeit zwischen Winkel und Auftreffort, ausgeglichen werden. Eine derartige Entzerrung geometrischen Fehler kann durch Berechnung eines verzenten Bildes, das entsprechend der auftretenden Verzenfunktionen durch das Umlenken und die sonstigen optischen Einflüsse bestimmt ist, erfolgen, wonach das Bild wie üblich dargestellt wird. Eine andere Möglichkeit besteht aber auch darin, die Ablenkeinrichtung bezüglich der aufgrund der Verzerrung erforderlichen Bildpunktdichte mit geeigneten Funktionen anzusteuern, so daß jeder Bildpunkt an dem für das unverzent darzustellende Videobild vorgegebenen Ort auf dem Schirm 2 abgebildet wird. Eine weitere Verbesserung bezüglich einer möglichst korrekten Bilddarstellung besteht darin, auch die Intensität des Laserstrahls bezüglich der eventuell, je nach der verwendeten Methode der Entzerrung, unterschiedliche Beleuchtungszeiten für jeden Bildpunkts auszusteuern.

Der Winkel β, der bei Fig. 1 und 2 jeweils null Grad beträgt, kann statt der vorhergenannten Obergrenze von 20° auch kleiner als 10° oder 5° sein, um einerseits eine möglichst geringe Bautiefe t zu ermöglichen und um andererseits zu vermeiden, daß die Projektionsbaugruppe 1 schirmseitig aus dem Gerät hervorsteht.

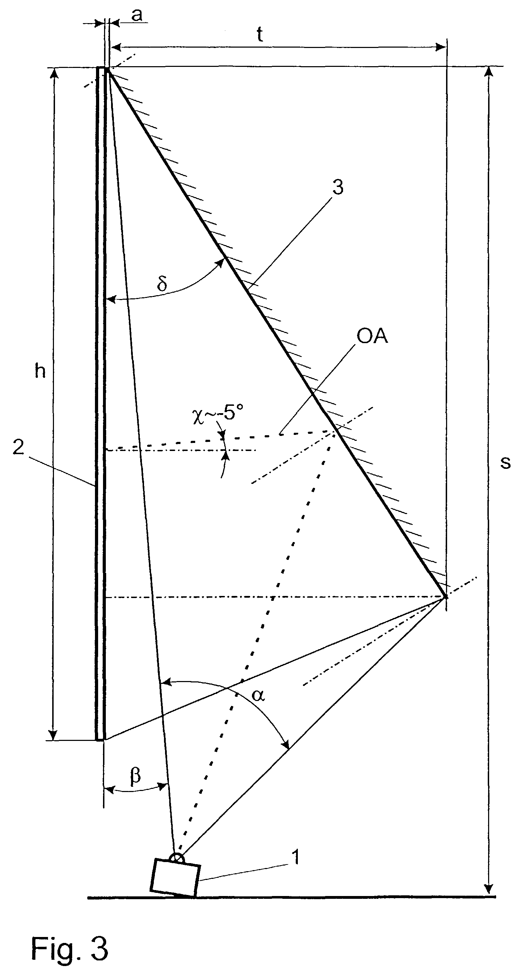

Fig. 3 zeigt ein zur Fig. 1 ähnliches Ausführungsbeispiel, jedoch mit verändertem Winkel β = 5°. Dabei ist die optische Achse aufgrund der Ausrichtung der Projektionsbaugruppe 1 zu dem Schirm 2 geneigt. Der Winkel δ ist gleich dem in Fig. 1 gewählt.

Wie deutlich aus Fig. 3 im Vergleich zu Fig. 2 erkennbar ist, rückt die Projektionsbaugruppe 1 bei von null verschiedenem Winkel β deutlich in das Geräteinnere, wobei die Abmessung des Umlenkspiegels 3 und der Gerätetiefe t nur unbedeutend größer geworden sind.

Es ist weiter eine Schrägprojektion mit einem kleinen Winkel von $\chi$ = -5° zu berücksichtigen. Ob man für derart kleine Winkel unbedingt eine Bildentzerrung durchführen will, hängt im wesentlichen davon ab, mit welcher Qualität die Bilder dargestellt werden sollen.

Die so mögliche Verschiebung der Projektionseinrichtung 1 in das Gehäuseinnere ist vorteilhaft, denn sie schafft an der Vorderseite Platz zum Einbau für eine Einrichtung für Senderwahl, einen Videorecorder und ähnliches.

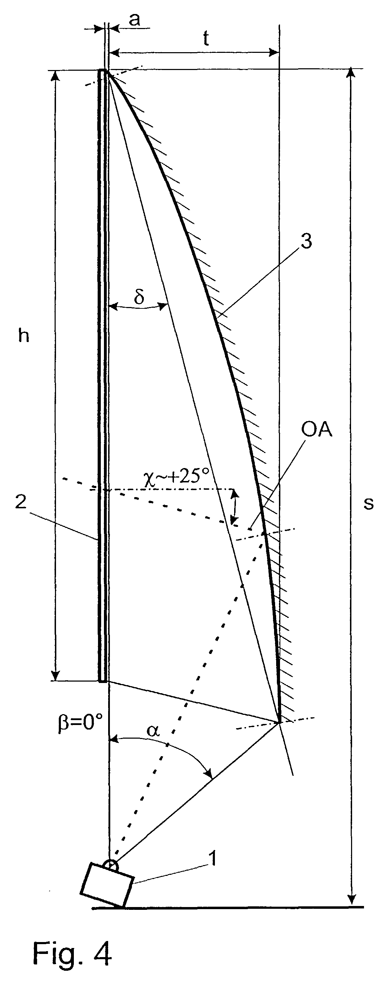

In der Fig. 4 ist ein Ausführungsbeispiel mit β = 0°, jedoch mit gekrümmtem Umlenkspiegel 3 gezeigt. Auch hier ist deutlich eine gegenüber dem ähnlichen Beispiel von Fig. 2 verringerte Bautiefe t bei ansonsten gleichen Parametern erkennbar.

Für dieses Ausführungsbeispiel ist eine konvexe Spiegelkrümmung gezeigt, die einerseits einen mechanischen stabilen Aufbau gewährleistet, andererseits die Lichtbündel auch fokussiert, wodurch die Auflösung der Bildpunkte erhöht ist und so die Bildqualität verbessert wird. Bei einer Korrektur des Videobildes gegen geometrische Bildfehler muß diese Krümmung des Umlenkspiegels 3 beispielsweise bei einer Neuberechnung des Bildes mitberücksichtigt werden.

Wie aus der Fig. 4 erkennbar ist, kann auch der Winkel δ, der bei Planspiegeln einfach definiert ist, geeignet gewählt werden. Um dieselben Verhältnisse wie bei Planspiegeln bezüglich der Bautiefe zu erhalten, sollte der Winkel δ ungefähr durch die äußeren Ecken des Umlenkspiegels 3 festgelegt werden. Das heißt, der Winkel δ ist bei gekrümmten Spiegeln zwischen der Projektionsfläche, also der Oberfläche des Schirms 2, und der Sehne bei den extremen Ablenkpunkten der Ablenkung über den Gesamtwinkel α zu bestimmen, wie es auch in Fig. 4 angezeigt ist.

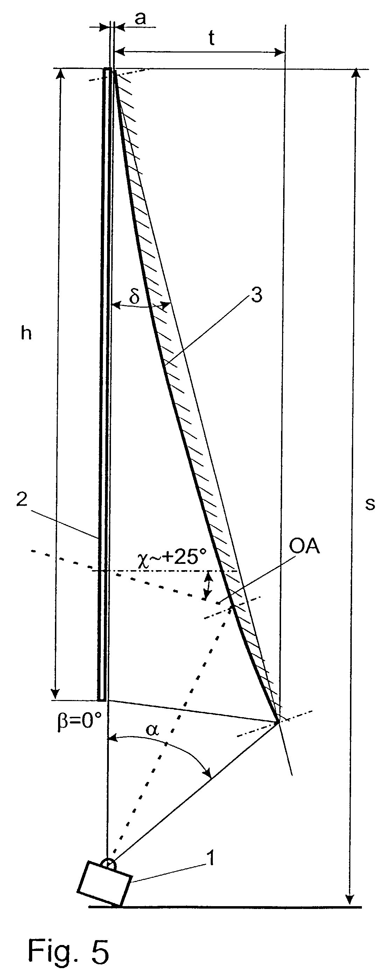

In Fig. 5 ist ein ähnlicher Aufbau wie in Fig. 4, jedoch mit konkavem Umlenkspiegel 3, gezeigt. Auch hier ist eine Bautiefenverringerung erkennbar. Der konkave Umlenkspiegel 3 weitet das Bild sogar auf, so daß auch aufgrund dessen bei gleicher Bauhöhe eine verringerte Tiefe erzeugt wird. Auch hier sollte die Krümmung des Umlenkspiegels 3 bei Entzerrung berücksichtigt werden.

Wie man sowohl aus Fig. 4 als auch Fig. 5 erkennt, ist eine Krümmung im allgemeinen vorteilhaft zur Verringerung der Bautiefe. Dies bedeutet insbesondere, daß die Krümmung vorteilhafterweise auch so gewählt werden kann, daß die Verzerrung aufgrund unterschiedlicher Anstellwinkel oder auch die Tangensabhängigkeit der Zeilenabstände auf dem Schirm 2 ausgeglichen wird, wobei sich eine Neuberechnung des Bildes zur Entzerrung erübrigen würde.

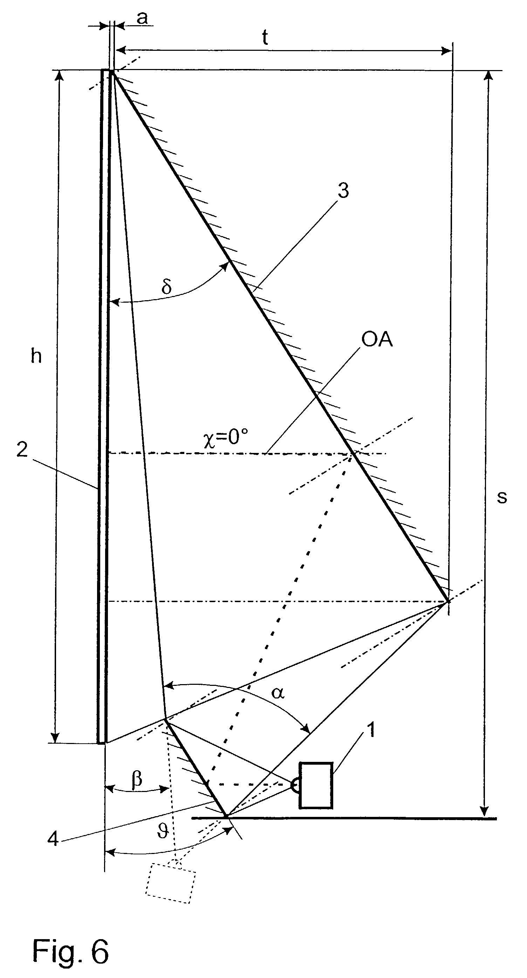

In Fig. 6 ist ein anderes Ausführungsbeispiel für eine Geradprojektion mit $\chi$ = 0° gezeigt. Zur weiteren Bautiefenverringerung ist hier ein weiterer Umlenkspiegel 4 vorgesehen, mit dem der Lichtweg noch einmal gefaltet wird. Dieser weitere Umlenkspiegel 4 ist im Winkel $\vartheta$ gegenüber dem Schirm 2 angeordnet. Es ist erkennbar, daß sich günstige Projektionsverhältnisse ergeben, wenn der Winkel $\vartheta$ = δ ist.

Durch den weiteren Umlenkspiegel 4 entsteht ein virtuelles Bild der Projektionsbaugruppe 1, das in Fig. 6 mit unterbrochenen Linien angedeutet ist und von dem aus gerechnet sich dann ähnliche Verhältnisse ergeben wie von den vorher betrachteten reellen Bildern. Insbesondere ist auch der Scheitelpunkt des Winkels α, der für die Bestimmung der optimalen Bedingungen gemäß der Erfindung wesentlich ist, hier virtuell.

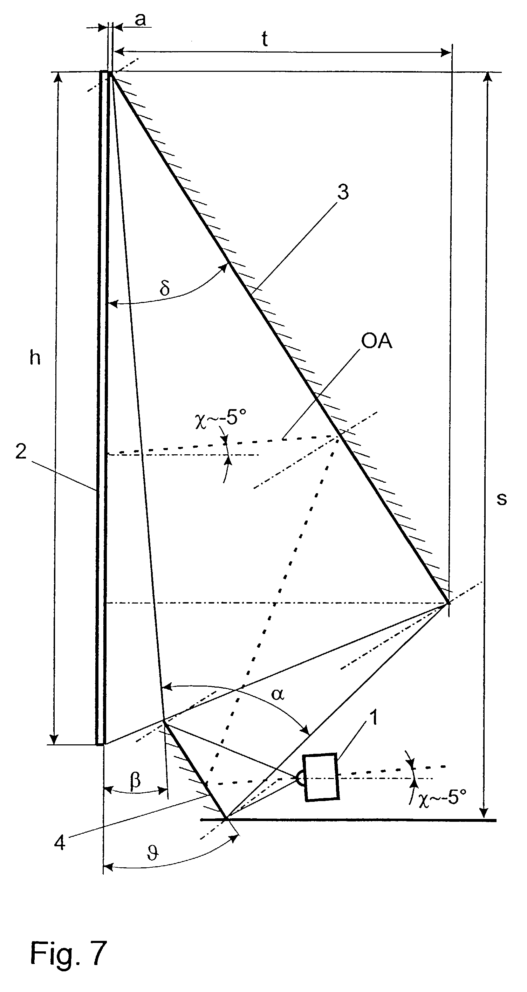

In Fig. 7 ist ein Rückprojektor gezeigt, bei dem eine gegenüber Fig. 6 geringe Schrägstellung der Projektionsbaugruppe 1 vorgesehen ist, wodurch eine Schrägprojektion mit dem Winkel $\chi$ = -5° erfolgt. Die Winkel $\vartheta$ und $\delta$ haben dabei die gleiche Größe.

Hier ist erkennbar, daß es bei einer Schrägprojektion mit einer derartigen Anordnung ebenfalls möglich ist, Verzerrungen aufgrund eines geänderten Winkels $\delta$, die sich ebenfalls auf eine Änderung des Winkels $\chi$ auswirken, auch durch Winkeländerungen der Projektionsbaugruppe 1zu kompensieren. Bei einer so kompensierten Geradprojektion kann der Winkel $\delta$ aber, wie aus dem Beispiel nach Fig. 2 erkennbar wurde, sogar noch wesentlich kleiner gehalten werden.

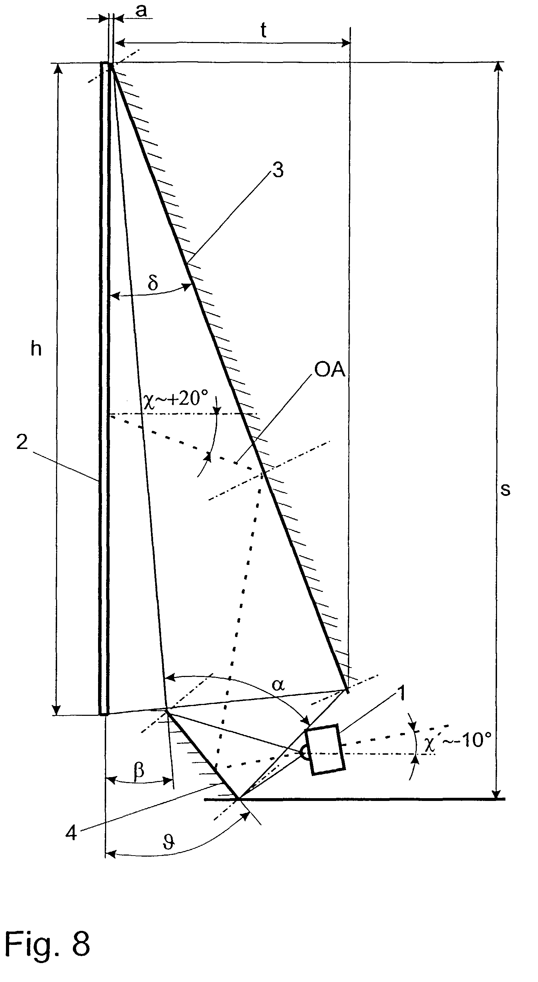

Ein ähnliches Ausführungsbeispiel, bei dem jedoch der Winkel $\delta$ wesentlich kleiner als der Winkel $\vartheta$ ist, so daß sich ein Anstellwinkel mit $\chi$ = 20° ergibt, ist in Fig. 8 gezeigt.

Beim Vergleich der verschiedenen Ausführungsbeispiele zeigt sich, daß unter Beibehaltung verringerter Gerätetiefen ähnliche Bedingungen gegeben sind. Insbesondere geht aus dem Ausführungsbeispiel von Fig. 8 hervor, daß bei einem Anstellwinkel $\chi$' = -10° von der Projektionsbaugruppe 1 auf dem Schirm eine Schrägstellung von etwa $\chi$ = 20° erreicht wird. Aufgrund der Änderungen des Projektionswinkels der Projektionsbaugruppe 1 kann man also verschiedene Winkel zur Verzerrungskorrektur einstellen, so daß beispielsweise durch entsprechende Wahl des Winkels $\chi$' sogar bei kleineren Winkeln $\delta$ auf eine Korrektur für geometrische Bildfehler verzichtet werden kann.

In Fig. 9 ist ein weiteres Ausführungsbeispiel gezeigt, bei dem man sich einen vergrößerten Abstand a, der dabei bis zu 10 cm betragen kann, zunutze macht. Hier wird die gesamte Projektionsbaugruppe 1 gemäß einer Alternative oberhalb des Schirms 2 angeordnet. Bei dieser Anordnung entsteht ein außerordentlich großer Lichtweg, der auch zu einer Verkleinerung des Ablenkwinkels $\alpha$, hier $\alpha$', führt, denn während in den vorherigen Beispielen der Winkel $\alpha$ ungefähr 45° betrug, kommt man hier bei gleicher Bildgröße mit einem wesentlich kleineren Winkel aus, so daß man beispielsweise auf eine spezielle Vergrößerungsoptik innerhalb der Projektionsbaugruppe 1 verzichten könnte.

Gegenüber der genannten Bauweise kann man alternativ noch eine weitere Verbesserung erreichen, bei der eine erste Baugruppe 6 vorgesehen ist, die über eine Lichtleitfaser 7 mit einer zweiten Baugruppe 5 verbunden ist. Die erste Baugruppe 1 enthält dabei nur die Ablenkeinrichtung und eventuell eine Vergrößerungsoptik, während die Baugruppe 5 die Laser, die Modulatoren und elektronische Steuereinrichtungen enthält. Diese Anordnung ist deswegen günstig, weil aufgrund der heutzutage zumeist noch schweren Laser im Ausführungsbeispiel, die dann in der zweiten Baugruppe 5 angeordnet sind, der Schwerpunkt stark nach unten verlagert wird, so daß sich eine erhöhte Stabilität für den Rückprojektor ergibt. Die so erreichbare Stabilität gegen Umkippen ist insbesondere bei äußerst flachen Projektoren vorteilhaft, deren Tiefe unter Ausnutzung aller in den verschiedenen Ausführungsbeispielen dargestellten Merkmale besonders gering gehalten werden kann.

Die vorangegangenen Beispiele zeigen, daß die Bautiefe insgesamt mit einer Kombination von Winkelstellungen und Entzenkorrekturen sowie anderen ergänzenden Maßnahmen noch weiter verringert werden kann, wobei die vorhergenannte Festlegung der Winkel $\delta$ und $\beta$ wesentlich wird. Weiter ist aus der vorangegangenen Diskussion deutlich geworden, daß es besonders vorteilhaft ist, den Umlenkspiegel entweder aufgrund seines Winkels $\delta$ oder einer Krümmung so auszugestalten, daß eine optische Bildverzerrung erfolgt, die durch Neuberechnung des Bildes bzw. durch Ansteuerung der Ablenkeinrichtung mit Funktionen, die der Verzerrung entgegenwirken, ausgeglichen wird. Insbesondere letzteres wird als weiterer wesentlicher Aspekt der Ausführungsbeispiele angesehen.

**Patentansprüche**

1. Rückprojektor mit einem Gehäuse, an dessen Vorderseite ein Schirm (2) zur Darstellung eines Videobildes angeordnet ist, mit einer helligkeits- und farbmodulierten R-G-B-Lichtquelle (5) zur Emission eines Lichtbündels, mit einer Ablenkeinrichtung (6) zum Rastern dieses Lichtbündels, mittels der das Lichtbündel bezüglich der bildmäßigen Rasterung über einen Gesamtwinkel $\alpha$ abgelenkt wird, und mit einem im Gehäuse befindlichen, unter einem Winkel $\delta$ angeordneten Umlenkspiegel (3), mit dem das aus einem reellen oder virtuellen Scheitelpunkt des Gesamtablenkwinkels $\alpha$ austretende Lichtbündel auf den Schirm (2) umgelenkt wird, dadurch gekennzeichnet, daß der vor dem Umlenkspiegel (3) liegende virtuelle oder reelle Scheitelpunkt an einem Ort liegt, bei dem der bei der Ablenkung kleinste Winkel $\beta$ des Lichtbündels zur Oberfläche des Schirms kleiner als 20° und der Winkel

$$\delta \leq 45° - \frac{\alpha}{4} + \beta$$

ist, wobei der Winkel $\delta$ für gekrümmte Spiegelflächen des Umlenkspiegels (3) zwischen der durch den Schirm (2) gegebenen Projektionsfläche und der Sehne zwischen den extremen Auftreffpunkten des Lichtbündels auf den Umlenkspiegel (3) bei der bildmäßigen Rasterung über den Winkel $\alpha$ bestimmt ist.

2. Rückprojektor nach Anspruch 1, dadurch gekennzeichnet, daß der Scheitelpunkt virtuell ist und durch weitere Umlenkspiegel (4) im Rückprojektor erzeugt ist.

3. Rückprojektor nach einem der Ansprüche 1 oder 2, gekennzeichnet durch eine Recheneinrichtung, mit der das Videobild vor Projektion bezüglich Verzerrungen aufgrund Schrägprojektion oder Krümmung des Umlenkspiegels (3) neu berechnet wird, sowie durch eine Steuereinrichtung, welche die Ablenkung und/oder Intensitätsmodulation des Lichtbündels steuert, so daß auf dem Schirm in Bildrichtung ein nahezu unverzentes Videobild erscheint, das bezüglich der Zeilenabstände weniger als 30% und insbesondere weniger als 10% von einer Gleichverteilung der Zeilen abweicht.

4. Rückprojektor nach einem der Ansprüche 1 bis 3, dadurch gekennzeichnet, daß der Abstand des Schirms (2) zu dem Punkt des Umlenkspiegels (3), auf den das Lichtbündel beim Winkel β auftrifft, kleiner als 10 cm und insbesondere kleiner als 3 cm ist.

5. Rückprojektor nach einem der Ansprüche 1 bis 4, dadurch gekennzeichnet, daß der Umlenkspiegel (3) ein planer Spiegel ist und ein bei einem Ablenkwinkel $\alpha/2$ in Richtung des Umlenkspiegels (3) reflektiertes Lichtbündel senkrecht auf den Schirm (2) auftrifft.

6. Rückprojektor nach einem der Ansprüche 1 bis 5, dadurch gekennzeichnet, daß die R-G-B-Lichtquelle (5) auf dem Boden des Gehäuses angeordnet ist.

7. Rückprojektor nach einem der Ansprüche 1 bis 6, dadurch gekennzeichnet, daß die Ablenkeinrichtung (6) am Boden des Gehäuses angeordnet ist.

8. Rückprojektor nach einem der Ansprüche 1 bis 7, dadurch gekennzeichnet, daß die Ablenkeinrichtung (6) eine bezüglich der Tangensbedingung korrigierte Vergrößerungsoptik zur proportionalen Vergrößerung des Tangens des Ablenkwinkels aufweist.

Fig. 1

Fig. 2

Fig. 3

Fig. 4

Fig. 5

Fig. 6

Fig. 7

Fig. 8

Fig. 9